# FASCICULE DE BREVET EUROPEEN

(11) **EP 0 848 282 B1**
(45) Date de publication et mention de la délivrance du brevet: **02.01.2002**
(21) Numéro de dépôt: 97101406.3
(22) Date de dépôt: 30.01.1997
(51) Int. Cl.: G03B 17/53, H04N 1/00

(54) **Cabines de reproduction photographique**
Kabinen zur photographischen Reproduktion
Booths for photographic reproduction

(30) Priorité: 16.12.1996 CH 307796
(43) Date de publication de la demande: 17.06.1998
(73) Titulaire: Ansermet, Jean, 1530 Payerne (CH)
(72) Inventeur: Ansermet, Jean, 1530 Payerne (CH)

(56) Documents cités:
- EP-A- 0 568 468
- DE-A- 4 436 087
- US-A- 3 722 384
- US-A- 4 888 606

## Description

La présente invention concerne les cabines de reproduction photographique comme les cabines que l'on trouve dans les lieux publics ou analogues et qui permettent à des personnes de se faire photographier automatiquement moyennant un paiement préalable, par exemple pour obtenir des photographies d'identité ou analogues. Une telle cabine est connue, par exemple de EPO 568 468.

De telles cabines sont déjà bien connues et donnent généralement de très bons résultats. Ces cabines de l'art antérieur comportent au moins un habitacle qui définit un espace intérieur clos par rapport à un espace donné qui est généralement un lieu public.

Dans le but de protéger les éléments actifs de la cabine, cet habitacle est réalisé avec des parois relativement solides, par exemple du type métallique ou analogue. Dans l'une de ces parois, est réalisée une fenêtre fermée par une vitre de protection.

Une telle cabine comporte bien entendu un appareil photographique comprenant un objectif de prise d'image, une entrée de commande de prise d'image et une sortie apte à délivrer des signaux représentatifs d'une image photographique. L'appareil photographique est situé dans l'espace intérieur de l'habitacle et disposé de façon que son champ de prise de vue traverse la vitre, dans l'ouverture de la fenêtre, suivant une figure géométrique déterminée pour pouvoir photographier les personnes qui se trouvent devant la vitre de protection.

Une cabine comme celle schématiquement décrite ci-dessus permet de réaliser des photographies d'une bonne qualité, à condition que la vitre à travers laquelle sont réalisées ces photographies ne soit pas souillée d'impuretés ou analogues. Car, outre le fait qu'elles affaiblissent la transparence de la vitre, ces impuretés constituent autant d'objets parasites qui sont photographiés avec l'utilisateur de la cabine, ce qui altère la qualité de l'image photographique et peut même la rendre impropre à l'utilisation à laquelle elle était destinée.

La présente invention a ainsi pour but de réaliser une cabine de reproduction photographique qui tente de pallier en grande partie l'inconvénient rappelé ci-dessus.

Plus précisément, la présente invention a pour objet une cabine de reproduction photographique comportant:
un habitacle définissant un espace intérieur, l'habitacle étant apte à être disposé dans un espace donné et étant constitué de parois solides,
une fenêtre réalisée dans l'une des parois de l'habitacle,
une vitre de protection pour obturer la fenêtre,
des moyens pour monter la vitre de protection en association avec la fenêtre,
un appareil photographique comportant un objectif de prise d'image, une entrée de commande de prise d'image et une sortie apte à délivrer des signaux représentatifs d'une image photographique,
des moyens pour monter l'appareil photographique dans l'espace intérieur de l'habitacle de façon que le champ de prise d'image de cet appareil traverse la vitre de protection, dans l'ouverture de la fenêtre, suivant une figure géométrique déterminée,
une imprimante apte à reproduire des images photographiques sur un support et à les délivrer à une sortie, l'imprimante comportant une entrée d'alimentation en signaux représentatifs d'images photogra-phiques,
des moyens pour monter l'imprimante dans l'espace intérieur de l'habitacle,
des moyens pour relier la sortie de l'appareil photographique à l'entrée d'alimentation de l'imprimante,
des moyens pour conduire les images photographiques reproduites sur support, depuis la sortie de l'imprimante à l'extérieur de l'habitacle, et
des moyens de commande montés en coopération avec l'appareil photographique et l'imprimante,
caractérisée par le fait que les moyens pour monter la vitre de protection en association avec la fenêtre comportent :
un cadre dans lequel est montée la vitre de protection,
des moyens pour déplacer le cadre en translation suivant une direction donnée dans son plan de façon que la vitre de protection soit située dans l'espace intérieur de l'habitacle,
des moyens pour commander le déplacement du cadre entre deux positions, ces deux positions étant séparées d'une distance de translation au moins égale à la distance qui, prise suivant la direction de translation, sépare un bord de l'ouverture de la fenêtre et le point de la figure géométrique le plus éloigné de ce bord.

D'autres caractéristiques et avantages de la présente invention apparaîtront au cours de la description suivante donnée en regard des dessins annexés à titre illustratif, mais nullement limitatif, dans lesquels:

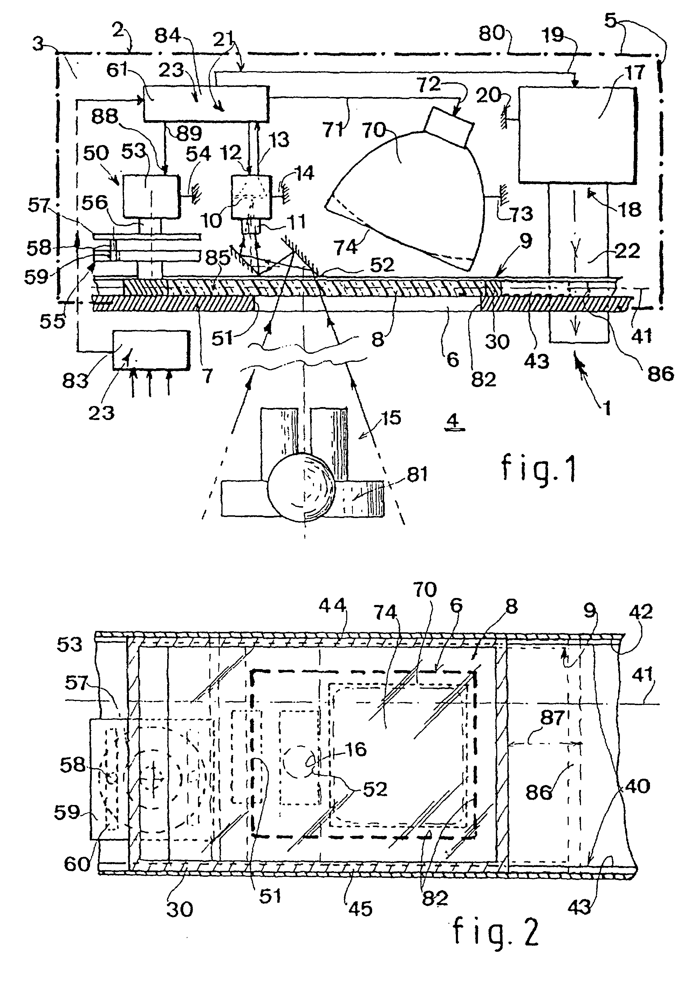

Les figures 1 et 2 représentent, sous forme schématique respectivement en vue de dessus et en vue de face, un mode de réalisation d'une cabine de reproduction photographique selon l'invention.

La Demanderesse tient à préciser que les figures représentent un mode de réalisation de l'objet selon l'invention et qu'il peut exister d'autres modes de réalisation qui répondent à la définition de cette invention.

Il est en outre, bien précisé que, lorsque, selon la définition de l'invention, l'objet de l'invention comporte "au moins un" élément ayant une fonction donnée, le mode de réalisation décrit peut comporter plusieurs de ces éléments.

Il est aussi précisé que, si le mode de réalisation de l'objet selon l'invention tel qu'illustré comporte plusieurs éléments de fonction identique et si, dans la description, il n'est pas spécifié que l'objet selon cette invention doit obligatoirement comporter un nombre particulier de ces éléments, l'objet de l'invention pourra être défini comme comportant "au moins un" de ces éléments.

Les figures 1 et 2 représentant un même mode de réalisation d'une cabine de reproduction photographique selon l'invention, les mêmes références y désignent les mêmes éléments quelle que soit la figure sur laquelle elles apparaissent, étant précisé que la figure 1 est une vue schématique de dessus de la cabine et que la figure 2 est une vue de face dans laquelle la paroi de devant n'a pas été représentée pour mieux faire apparaître les éléments entrant dans la constitution de la cabine ainsi que leur disposition les uns par rapport aux autres.

La cabine représentée sur les figures 1 et 2 est plus particulièrement une cabine de reproduction photographique 1 du type vidéo, mais il est bien évident que l'invention peut s'appliquer à tout type de cabine, quel que soit le mode de réalisation des photographies.

La cabine 1 illustrée comporte au moins un habitacle 2 formé de parois 5 relativement solides, une partie seulement de l'une de ces parois étant représentée en coupe, les autres étant schématisées par des points-traits 80.

L'habitacle 2 définit un espace intérieur 3, l'extérieur à cet habitacle étant référencé 4 et définissant le milieu ambiant dans lequel se trouve la personne 81 qui désire se faire photographier.

Dans l'une 7 des parois 5 de l'habitacle est réalisée une fenêtre 6 obturée par une vitre de protection 8. Cette vitre de protection 8 est montée en association avec la fenêtre 6 par des moyens référencés 9 qui seront explicités ci-après.

La cabine comporte un appareil photographique 10, par exemple optique, vidéo ou analogue, comprenant un objectif de prise d'image 11, une entrée 12 de commande de prise d'image et une sortie 13 apte à délivrer des signaux représentatifs d'une image photographique. L'entrée de commande est par exemple une entrée apte à recevoir un signal d'ordre qui permet de déclencher l'appareil photographique lorsque l'on veut prendre une photo. La sortie 13 permet de délivrer des signaux dont la nature est fonction du type d'appareil photographique 10 utilisé.

Sont en outre prévus des moyens, schématiquement illustrés en 14, pour monter l'appareil photographique 10 dans l'espace intérieur 3 de l'habitacle 2. L'appareil est disposé dans l'habitacle 2 de façon que son champ de prise d'image 15 traverse la vitre de protection 8, dans l'ouverture de la fenêtre 6 représentée par sa trace 82 en traits interrompus sur la figure 2, suivant une figure géométrique déterminée 16. Cette figure est, suivant le type d'objectif, soit un cercle, soit un carré ou un rectangle, mais sa forme géométrique ne doit pas être limitée à ces exemples. Cette figure géométrique est la figure formée par l'intersection du volume défini par le champ de prise d'image de l'appareil (dénommé aussi "champ de prise de vue") et du plan de la vitre de protection.

Dans la cabine, est prévue une imprimante 17 apte à reproduire des images photographiques sur un support et à les délivrer à une sortie 18. Il est précisé que, par imprimante, on entend tout dispositif qui permet de reproduire une image photographique sur tout support et par tous moyens physiques, électroniques, photographiques, chimiques, etc. L'imprimante comporte une entrée d'alimentation 19 en signaux représentatifs d'images photographiques et la cabine comporte des moyens 21 pour relier la sortie 13 de l'appareil photographique 10 à cette entrée d'alimentation 19 de l'imprimante.

De façon avantageuse, il est prévu des moyens, schématiquement représentés en 20, pour monter l'imprimante dans l'espace intérieur 3 de l'habitacle 2. La sortie de l'imprimante est reliée à l'extérieur de l'habitacle par des moyens 22, par exemple une goulotte ou analogue, pour conduire les images reproduites sur support par l'imprimante et délivrées à sa sortie 18 jusqu'à l'extérieur 4 de l'habitacle 2, à la disposition de l'utilisateur 81 de la cabine.

Une cabine comme celle décrite ci-dessus est essentiellement prévue pour fonctionner selon la méthode dite "à prépaiement". Aussi, comporte-t-elle des moyens de commande 23 montés en coopération avec l'appareil photographique 10 et l'imprimante 17. Ces moyens de commande 23 comportent de façon schématique un monnayeur 83 et une unité de traitement 84 qui est apte à délivrer en sortie des signaux pour commander l'appareil photographique 10 et l'imprimante 17. Ces moyens de commande 23 sont bien connus en eux-mêmes et ne présentent de difficulté de mise en oeuvre par un homme du métier. Ils ne seront pas plus amplement décrits ici.

Comme mentionné ci-avant, la cabine 1 comportent des moyens 9 pour monter la vitre de protection 8 en association avec la fenêtre 6.

Selon l'invention, ces moyens 9 comportent un cadre 30 dans lequel est montée la vitre de protection 8, des moyens 40 pour déplacer le cadre 30 en translation suivant une direction donnée 41, par exemple horizontalement et dans son plan, de façon que la vitre de protection soit située dans l'espace intérieur 3 de l'habitacle 2, des moyens 50 pour commander le déplacement du cadre 30 entre deux positions, ces deux positions étant séparées d'une distance de translation, représentée par la longueur de la double flèche 87, figure 2, au moins égale à la distance qui, prise suivant la direction de translation 41, sépare un bord 51 de l'ouverture de la fenêtre 6 et le point 52 de la figure géométrique 16 définie ci-avant, le plus éloigné de ce bord 51.

Par cadre 30, on entend tout moyen qui permette de maintenir une vitre, en sachant même que les bords de la vitre elle-même peuvent constituer ce cadre. Cette seconde solution, bien que possible, n'est pas très industrielle et n'a pas été représentée.

Les moyens 50 pour commander le déplacement du cadre 30 entre deux positions définies ci-dessus comportent au moins une entrée de commande 88 apte à recevoir un signal d'ordre qui peut être émis, par exemple, à une sortie 89 de l'unité de traitement 84. Ce signal d'ordre sera émis chaque fois que le monnayeur 83 aura reçu une somme correspondant à la réalisation d'une photographie.

Lorsqu'une personne désire se faire photographier en utilisant une cabine telle que décrite ci-dessus, de façon classique, elle introduit d'abord des moyens de paiement dans le monnayeur 83. L'unité de traitement 84 envoie alors aux moyens 50 le signal d'ordre mentionné ci-dessus pour commander la translation du cadre 30 sur la distance de translation 87, ce qui permet à la partie 85 de la vitre de protection 8, qui se trouvait derrière la paroi 7, de venir se placer devant la figure géométrique 16 définie ci-avant.

Comme cette partie de vitre 85 était protégée par la paroi 7, il y a une très forte probabilité pour qu'elle soit propre. La photographie obtenue ne sera donc pas altérée par la présence de corps parasites opaques ou similaires dans le champ de l'objectif, même si l'autre partie de la vitre 8 porte des salissures ou analogues.

A l'issue d'une constante de temps au moins égale au temps mis par la vitre pour passer d'une position à l'autre, l'unité de traitement 84 commande la prise de vue demandée par l'utilisateur, c'est-à-dire le fonctionnement de l'appareil photographique 10 et de l'imprimante 17.

Une fois la photographie réalisée, la vitre de protection est ramenée dans sa position origine, celle dans laquelle sa partie 85 se place derrière la paroi 7. Les figures représentent la vitre 8 et son cadre 30 dans la position où la partie de vitre 85 est cachée derrière la paroi 7. L'autre position de la vitre et de son cadre est évoquée en traits interrompus 86.

En outre, du fait que le cadre 30 se déplace dans son plan et qu'il en est donc de même pour la vitre de protection 8, les personnes qui se trouvent devant cette vitre ne s'aperçoivent généralement pas qu'elle se déplace, ce qui limite les risques d'une altération de la surface de la partie de vitre 85 au moment de la réalisation de la photographie.

Dans une réalisation possible de mise en oeuvre, les moyens 40 pour déplacer le cadre 30 en translation suivant la direction donnée 41 comportent au moins deux rails longitudinaux 42, 43, des moyens pour monter ces deux rails dans l'espace intérieur 3 de l'habitacle 2 de façon qu'ils soient parallèles à la direction donnée 41, le cadre 30 comportant, sur deux côtés opposés, des bords 44, 45 en forme de glissières complémentaires des deux rails, ces deux bords 44, 45 en forme de glissières étant montés coulissant respectivement sur les deux rails 42, 43. Il est bien précisé que, par le couple "rail-glissière", on entend tout système qui permet un déplacement en translation d'un élément par rapport à un autre, par tout moyen, roulement, coulissement, glissement, etc.

Quant aux moyens 50 pour commander le déplacement du cadre 30 entre les deux dites positions, ils comportent avantageusement un moteur 53 à stator, rotor et arbre de sortie, et des moyens 55 pour transformer le mouvement de rotation de l'arbre de sortie 56 du moteur 53 en un mouvement de translation alternatif du cadre 30 entre les deux dites positions, ce mouvement de translation alternatif ayant une amplitude égale à la distance de translation 87 du cadre. Le moteur 53 est commandable à partir d'une entrée d'alimentation constituant l'entrée de commande 88 définie ci-avant.

De façon classique, il est aussi prévu des moyens représentés schématiquement en 54 pour fixer le stator du moteur dans l'habitacle 2.

A titre d'exemple, les moyens 55 pour transformer le mouvement de rotation de l'arbre de sortie 56 du moteur 53 en un mouvement de translation alternatif du cadre 30 peuvent comporter une manivelle 57 solidaire de l'arbre de sortie 56 du moteur 53, un ergot 58 solidaire de la manivelle 57 suivant un axe sensiblement parallèle à l'axe de l'arbre de sortie 56 du moteur et situé sur la manivelle à une distance d'écartement de l'axe de l'arbre de sortie du moteur au moins égale à la moitié de la distance de translation 87 du cadre, une came 59 montée solidaire du cadre 30, (il est possible que la came soit réalisée directement dans le cadre 30), la came comportant une rainure 60 réalisée suivant un axe sensiblement perpendiculaire à la direction de translation 41, la longueur de cette rainure étant au moins égale à la moitié de la distance de translation 87 définie ci-avant.

Sur la figure 2, la longueur de la rainure 60 a été représentée d'une valeur égale à la distance de translation 87. Cette caractéristique permet de faire tourner pas-à-pas le moteur toujours dans le même sens pour obtenir le mouvement alternatif du cadre comme décrit ci-dessus.

Le fonctionnement du mode de réalisation des moyens 50 décrit ci-dessus ne présente pas de difficulté de compréhension: en effectuant un demi-tour, le moteur fait passer l'ergot 58, par référence à la figure 1, de la gauche de l'arbre 56 à sa droite, les positions de l'ergot au début et en fin de mouvement définissant une droite parallèle à la direction 41. Dans ce mouvement, l'ergot entraîne la came 59, et donc le cadre 30, en translation d'une valeur égale au double de la distance séparant l'ergot 58 de l'axe de l'arbre 56, c'est-à-dire égale à la distance de translation 87 souhaitée pour la vitre de protection 8. Le mouvement de retour du cadre 30 se fait quand le moteur effectue un autre demi-tour suivant le premier.

Comme mentionné ci-avant, l'appareil photographique 10 est actuellement très souvent un appareil du type vidéo. Dans ce cas, la cabine comporte aussi de préférence un moniteur vidéo 70 et des moyens 71 pour relier la sortie 13 de l'appareil photographique vidéo à l'entrée d'alimentation 72 du moniteur vidéo 70. Il est de plus prévu des moyens schématiquement illustrés en 73 pour monter le moniteur vidéo dans l'espace intérieur 3 de l'habitacle 2 de façon que son écran de visualisation 74 soit sensiblement en regard de la fenêtre 6 pour que les personnes puissent se voir préalablement à la prise de la photographie.

A la lecture de la présente description, il apparaît que la structure d'une cabine de reproduction selon l'invention permet aux utilisateurs de la cabine d'obtenir des photographies d'une très bonne qualité, même si la vitre de protection a été souillée de graffitis ou autres salissures pendant la non-utilisation de la cabine, puisqu'une partie de la vitre de protection est protégée par une paroi de la cabine pendant la non-utilisation de cette cabine et ne traverse le champ de prise de vue de l'appareil qu'après le paiement de la photographie, juste avant la prise de vue.

## Revendications

1. Cabine de reproduction photographique (1) comportant:
un habitacle (2) définissant un espace intérieur (3), l'habitacle étant apte à être disposé dans un espace donné (4) et étant constitué de parois solides (5),
une fenêtre (6) réalisée dans l'une (7) des parois (5) de l'habitacle,
une vitre de protection (8) pour obturer la fenêtre (6),
des moyens (9) pour monter la vitre de protection (8) en association avec la fenêtre (6),
un appareil photographique (10) comportant un objectif de prise d'image (11), une entrée (12) de commande de prise d'image et une sortie (13) apte à délivrer des signaux représentatifs d'une image photographique,
des moyens (14) pour monter l'appareil photographique (10) dans l'espace intérieur (3) de l'habitacle (2) de façon que le champ de prise d'image (15) de cet appareil (10) traverse la vitre de protection (8), dans l'ouverture (82) de la fenêtre (6), suivant une figure géométrique (16) déterminée,
une imprimante (17) apte à reproduire des images photographiques sur un support et à les délivrer à une sortie (18), l'imprimante comportant une entrée d'alimentation (19) en signaux représentatifs d'images photographiques,
des moyens (20) pour monter l'imprimante dans l'espace intérieur (3) de l'habitacle (2),
des moyens (21) pour relier la sortie (13) de l'appareil photographique (10) à l'entrée d'alimentation (19) de l'imprimante (17),
des moyens (22) pour conduire les images photographiques reproduites sur support, depuis la sortie (18) de l'imprimante (17) à l'extérieur (4) de l'habitacle (2), et
des moyens de commande (23) montés en coopération avec l'appareil photographique (10) et l'imprimante (17),
**CARACTERISEE PAR LE FAIT QUE** les moyens (9) pour monter la vitre de protection (8) en association avec la fenêtre (6) comportent :
un cadre (30) dans lequel est montée la vitre de protection (8),
des moyens (40) pour déplacer le cadre (30) en translation suivant une direction donnée (41) dans son plan de façon que la vitre de protection soit située dans l'espace intérieur (3) de l'habitacle (2),
des moyens (50) pour commander le déplacement du cadre (30) entre deux positions, ces deux positions étant séparées d'une distance de translation (87) au moins égale à la distance qui, prise suivant la direction de translation (41), sépare un bord (51) de l'ouverture (82) de la fenêtre (6) et le point (52) de la figure géométrique (16) le plus éloigné de ce bord (51).

2. Cabine selon la revendication 1, **caractérisée par le fait que** les moyens (40) pour déplacer le cadre (30) en translation suivant la direction donnée (41) comportent au moins deux rails longitudinaux (42, 43), des moyens pour monter ces deux rails dans l'espace intérieur (3) de l'habitacle (2) de façon qu'ils soient parallèles à la direction donnée (41), le cadre (30) comportant, sur deux côtés opposés, des bords (44, 45) en forme de glissières complémentaires des deux rails, ces deux bords (44, 45) en forme de glissières étant montés coulissant respectivement sur les deux rails (42, 43).

3. Cabine selon l'une des revendications 1 et 2, **caractérisée par le fait que** les moyens (50) pour commander le déplacement du cadre (30) entre les deux dites positions comportent:
un moteur (53) à stator, rotor et arbre de sortie, et
des moyens (55) pour transformer le mouvement de rotation de l'arbre de sortie (56) du moteur (53) en un mouvement de translation alternatif du cadre (30) entre les deux dites positions, ce mouvement de translation alternatif ayant une amplitude égale à la distance de translation (87) du cadre.

4. Cabine selon la revendication 3, **caractérisée par le fait que** les moyens (55) pour transformer le mouvement de rotation de l'arbre de sortie (56) du moteur (53) en un mouvement de translation alternatif du cadre (30) entre les deux dites positions comportent:
une manivelle (57) solidaire de l'arbre de sortie (56) du moteur (53),
un ergot (58) solidaire de la manivelle (57) suivant un axe sensiblement parallèle à l'axe de l'arbre de sortie (56) du moteur (53) et situé sur la manivelle à une distance d'écartement de l'axe de l'arbre de sortie du moteur au moins égale à la moitié de la distance de translation (87) du cadre, et
une came (59) montée solidaire du cadre (30), la came comportant une rainure (60) réalisée suivant Un axe sensiblement perpendiculaire à la direction de translation (41), la longueur de cette rainure étant au moins égale à la moitié de la distance de translation, et des moyens (23, 89, 88) pour commander la rotation du moteur (53).

5. Cabine selon la revendication 4, **caractérisée par le fait que** la longueur de ladite rainure (60) est égale à la distance de translation (87).

6. Cabine selon l'une des revendications précédentes, **caractérisée par le fait qu'**elle comporte en outre, lorsque l'appareil photographique (10) est un appareil du type vidéo, un moniteur vidéo (70), des moyens (71) pour relier la sortie (13) de l'appareil photographique vidéo à l'entrée d'alimentation (72) du moniteur vidéo (70), et des moyens (73) pour monter le moniteur vidéo dans l'espace intérieur (3) de l'habitacle (2) de façon que son écran de visualisation (74) soit sensiblement en regard de la fenêtre (6).

## Patentansprüche

1. Kabine für fotografische Aufnahmen (1) mit:
einer Kabine (2), die einen Innenraum (3) begrenzt, wobei die Kabine in einem gegebenen Raum (4) aufgestellt werden kann und mit soliden Wähden (5) konstruiert wird.
einer Fensteröffnung (6) in einer (7) der Wände (5) der Kabine,
einer Schutzscheibe (8), die diese Öffnung (6) verschliesst,
Vorrichtungen (9) zur Montage der Schutzscheibe (8), zusammen mit dem Fenster (6),
einer Kamera (10) mit einem Aufnahmeobjektiv (11), einem Steuerungseingang (12) für die Aufnahme und einem Ausgang (13), der charakteristische Signale einer Fotografie abgeben kann,
Vorrichtungen (14), um den Fotoapparat (10) im Innenraum (3) der Kabine (2) so zu montieren, dass das Aufnahmefeld (15) dieses Apparats (10) gemäss einer festgelegten geometrischen Figur (16) die Schutzscheibe (8) in der Öffnung (82) des Fensters (6) durchquert,
einem Drucker (17), der sich dazu eignet, fotografische Bilder auf einem Träger aufzubringen und sie an einen Ausgang (18) zu liefern, wobei der Drucker einen Eingang (19) für die charakteristischen Fotosignale besitzt.
Vorrichtungen (20) zur Montage des Druckers im Innenraum (3) der Kabine (2),
Vorrichtungen (21) zum Verbinden des Ausgangs (13) des Fotoapparats (10) mit dem Eingang (19) des Druckers (17),
Vorrichtungen (22), um die auf einen Träger aufgebrachten Fotografien vom Ausgang (18) des Druckers (17) nach ausserhalb (4) der Kabine (2) zu transportieren, und
Steuerungsvorrichtungen (23), die zusammen mit dem Fotoapparat (10) und dem Drucker (17) montiert sind,
DIE SICH DADURCH AUSZEICHNET, DASS die Vorrichtungen (9) zur Montage der Schutzscheibe (8) zusammen mit der Fensteröffnung (6) aus folgenden Teilen bestehen:
einem Rahmen (30), in dem die Schutzscheibe (8) montiert ist,
Vorrichtungen (40) zum seitlichen Verschieben des Rahmens (30) in eine bestimmte Richtung (41) in seiner Ebene und in der Weise, dass die Schutzscheibe innerhalb des Innenraums (3) der Kabine (2) bleibt.
Vorrichtungen (50) zur Steuerung der Verschiebung des Rahmens (30) zwischen zwei Positionen, wobei zwischen diesen beiden Positionen ein Verschiebungsabstand (87) liegt, der je nach der Richtung (41), in die verschoben wird, zwischen einer Kante (51) der Öffnung (82) des Fensters (6) sowie dem Punkt (52) der geometrischen Figur (16), der am weitesten von dieser Kante (51) entfernt ist, besteht.

2. Kabine gemäss Patentanspruch 1, **gekennzeichnet dadurch, dass** die Vorrichtungen (40) zur Verschiebung des Rahmens (30) in die vorgegebene Richtung (41) mindestens aus zwei Längsschienen (42,43,) bestehen, aus Vorrichtungen zur Montage dieser beiden Schienen im Innenraum (3) der Kabine (2) in der Weise, dass sie parallel zur vorgegebenen Richtung (41) verlaufen, wobei der Rahmen (30), der auf den beiden gegenüber liegenden Seiten Borde (44,45) in Form von Laufschienen besitzt, die die beiden (Längs-)Schienen ergänzen, wobei diese beiden Laufschienen (44,45) so montiert sind, dass sie jeweils in den (Längs-) Schienen (42,43) laufen.

3. Kabine gemäss eines der Patentansprüche 1 oder 2, **gekennzeichnet dadurch, dass** die Vorrichtungen (50) zur Steuerung der Verschiebung des Rahmens (30) zwischen den beiden besagten Positionen Folgendes enthalten:
einen Motor (53) mit Stator, Rotor und abtreibender Welle und
Vorrichtungen (55) zur Umwandlung der Drehbewegung der abtreibenden Welle (56) des Motors (53) in eine seitliche Verschiebebewegung des Rahmens (30) zwischen den besagten Positionen, wobei diese Hin- und Her-Bewegung einen Weg umfasst, der gleich dem Verschiebeabstand des Rahmens (87) ist.

4. Kabine gemäss Patentanspruch 3, **gekennzeichnet dadurch, dass** die Vorrichtungen (55) zur Umwandlung der Drehbewegung der abtreibenden Welle (56) des Motors (53) in die seitliche Verschiebung des Rahmens (30) zwischen den besagten Punkten aus folgenden Teilen bestehen:
eine Handkurbel (57), in Einheit mit der abtreibenden Welle (56) des Motors (53),
einem Nocken (58), integriert in die Handkurbel (57), wobei die Achse in etwa parallel zur Achse der abtreibenden Welle (56) des Motors (53) verläuft, und die auf dieser Kurbel in einem Abstand von der Achse der Abtriebswelle des Motors sitzt, der mindestens die Hälfte des Verschiebeabstands (87) des Rahmens beträgt, und
einer Nase (59), integriert im Rahmen (30), wobei diese Nase eine Rille (60) aufweist, die in etwa lotrecht zur Verschieberichtung (41) verläuft, wobei die Länge dieser Rille mindestens die Hälfte des Verschiebeabstands beträgt, und Vorrichtungen (23, 89, 88) zur Steuerung der Motordrehung (53).

5. Kabine gemäss Patentanspruch 4, **dadurch gekennzeichnet, dass** die Länge der besagten Rille (60) gleich dem Verschiebeabstand (87) ist.

6. Kabine gemäss einem der vorangegangenen Patentansprüche, **dadurch gekennzeichnet, dass** sie ausserdem die folgenden Teile enthält, wenn die Fotokamera (10) ein Gerät vom Typ Video ist: einen Video-Monitor (70), Vorrichtungen (71) zur Verbindung des Ausgangs (13) der Video-Fotokamera mit dem Anschlusseingang (72) des Video-Monitors (70), und Vorrichtungen (73) zur Montage des Video-Monitors im Innenraum (3) der Kabine (2) dergestalt, dass sein Bildschirm (74) sich in etwa gegenüber der Fensteröffnung (6) befindet.

## Claims

1. Photographic reproduction booth (1) comprising:
a compartment (2) defining an interior space (3), the compartment being capable of being arranged in a given space (4) and consisting of solid walls (5),
a window (6) made in one (7) of the walls (5) of the compartment,
a protective pane (8) for closing up the window (6),
means (9) for fitting the protective pane (8) in association with the window (6),
a camera (10) comprising a picture-taking lens (11), a picture-taking control input (12) and an output (13) capable of delivering signals representing a photographic image,
means (14) for fitting the camera (10) in the interior space (3) of the compartment (2) so that picture-taking field (15) of this camera (10) crosses the protective pane (8), in the opening (82) of the window (6), along a determined geometrical figure (16).
a printer (17) capable of reproducing photographic images on a medium and delivering them to an output (18), the printer comprising an input (19) supplying signals representing photographic images,
means (20) for fitting the printer in the interior space (3) of the compartment (2),
means (21) for connecting the output (13) of the camera (10) to the supply input (19) of the printer (17),
means (22) for conducting the photographic images reproduced on a medium, from the output (18) of the printer (17) to the outside (4) of the compartment (2), and
means of control (23) fitted in cooperation with the camera (10) and the printer (17).
**CHARACTERIZED BY** THE FACT THAT the means (9) for fitting the protective pane (8) in association with the window (6) comprise:
a frame (30) in which the protective pane (8) is fitted,
means (40) for moving the frame (30) translationally along a given direction (41) in its plane so that the protective pane is situated in the interior space (3) of the compartment (2).
means (50) for controlling the movement of the frame (30) between two positions, these two positions being separated by a translation distance (87) at least equal to the distance which, taken along the direction of translation (41), separates one edge (51) of the opening (82) of the window (6) and the point (52) of the geometrical figure (16) farthest from this edge (51).

2. Booth according to claim 1, **characterized by** the fact that the means (40) for moving the frame (30) translationally along the given, direction (41) comprise at least two longitudinal rails (42,43), means for fitting these two rails in the interior space (3) of the compartment (2) so that they are parallel to the given direction (41), the frame (30) including, on two opposite sides, edges (44, 45) in the form of slides complementary to the two rails, these two edges (44, 45) in the form of slides being mounted sliding on the two rails (42, 43) respectively.

3. Booth according to one of claims 1 and 2, **characterized by** the fact that the means (50) for controlling the movement of the frame (30) between the two said positions comprise:
a motor (53) with a stator, rotor and output shaft, and
means (55) for converting the rotational movement of the output shaft (56) of the motor (53) into an alternating translational movement of the frame (30) between the two said positions, this alternating translational movement having an amplitude equal to the translation distance (87) of the frame.

4. Booth according to claim 3, **characterized by** the fact that the means (55) for converting the rotational movement of the output shaft (56) of the motor (53) into an alternating translational movement of the frame (30) between the two said positions comprise:
a crank (57) integral with the output shaft (56) of the motor (53),
a pin (58) integral with the crank (57) along an axis appreciably parallel to the axis of the output shaft (56) of the motor (53) and positioned on the crank at a distance apart from the axis of the motor output shaft at least equal to half the translation distance (87) of the frame, and
a cam (59) fitted integrally with the frame (30), the cam including a groove (60) made along an axis appreciably perpendicular to the direction of translation (41), the length of this groove being at least equal to half the translation distance, and means (23, 89, 88) for controlling the rotation of the motor (53).

5. Booth according to claim 4, **characterized by** the fact that the length of the said groove (60) is equal to the translation distance (87).

6. Booth according to one of the preceding claims, **characterized by** the fact that when the camera (10) is of the video type, it further includes a video monitor (70), means (71) for connecting the output (13) of the video camera to the supply input (72) of the video monitor (70), and means (73) for fitting the video monitor in the interior space (3) of the compartment (2) so that its display screen (74) is appreciably opposite the window (6).
